(19) Europäisches Patentamt
European Patent Office
Office européen des brevets

(11) EP 4 488 325 A1

(12) **EUROPEAN PATENT APPLICATION**
published in accordance with Art. 153(4) EPC

(43) Date of publication:
**08.01.2025 Bulletin 2025/02**

(21) Application number: **23778837.7**

(22) Date of filing: **02.02.2023**

(51) International Patent Classification (IPC):
***C08L 11/00** (2006.01)* ***C08F 2/44** (2006.01)*
***C08F 279/02** (2006.01)*

(52) Cooperative Patent Classification (CPC):
**C08F 2/44; C08F 279/02; C08L 11/00**

(86) International application number:
**PCT/JP2023/003349**

(87) International publication number:
**WO 2023/188801 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022059370**

(71) Applicant: **Denka Company Limited**
**Tokyo 103-8338 (JP)**

(72) Inventors:
- **KUMAGAI, Yushi**
  **Tokyo 103-8338 (JP)**
- **NISHINO, Wataru**
  **Tokyo 103-8338 (JP)**
- **ITO, Misaki**
  **Tokyo 103-8338 (JP)**

(74) Representative: **Gulde & Partner**
**Patent- und Rechtsanwaltskanzlei mbB**
**Berliner Freiheit 2**
**10785 Berlin (DE)**

(54) **METHOD FOR PRODUCING CHLOROPRENE-BASED POLYMER COMPOSITION**

(57) The present invention aims to provide a method for producing a chloroprene-based polymer composition capable of obtaining a dip-molded article having a high recovery rate from a polymerization container, a low modulus at 100% elongation, and an excellent tensile strength at break.

According to the present invention, provided is a method for producing a chloroprene-based polymer composition, in which the chloroprene-based polymer composition contains a diene-based polymer A and a chloroprene-based polymer B, a weight average molecular weight of the diene-based polymer A is different from a weight average molecular weight of the chloroprene-based polymer B, and the method comprises a polymerization step of forming the chloroprene-based polymer B via polymerization in presence of the diene-based polymer A.

EP 4 488 325 A1

## Description

### Technical Field

The present invention relates to a method for producing a chloroprene-based polymer composition.

### Background Art

Chloroprene-based polymers are known as a material for dip-molded products using a dip-molded article, such as medical surgical gloves, medical examination gloves, industrial gloves, balloons, catheters, and rubber boots.

Various techniques have been proposed for chloroprene-based polymer latexes and chloroprene-based polymer dip-molded articles for dip-molded product applications related to improving the flexibility of chloroprene-based polymers. Regarding dip-molded product applications, Patent Literature 1 describes a polychloroprene latex with a pH of 7 to 14, which contains 100 parts by mass of modified polychloroprene obtained by copolymerizing chloroprene and methacrylic acid, 90 to 150 parts by mass of water, 1 to 5 parts by mass of emulsifier, and 0.5 to 2.5 parts by mass of potassium ion. Regarding dip-molded product applications, Patent Literature 2 describes a mercaptan modified polychloroprene latex, in which chloroprene and 2,3-dichloro-1,3-butadiene are copolymerized, and in the 13C-solid NMR spectrum of polychloroprene, a peak area (A) at 126.2 to 127.6 ppm, a peak area (B) at 122.0 to 126.2 ppm, and a peak area (C) at 129.9 to 130.3 ppm are within the range shown by the following general formula (I). Regarding dip-molded product applications, Patent Literature 3 describes a chloroprene polymer latex that can achieve both excellent flexibility and mechanical properties in a vulcanized rubber produced by dip-molding by containing a high molecular weight substance and a low molecular weight substance. Patent Literature 4 describes a chloroprene-based polymer latex that exhibits excellent flexibility and mechanical properties even under mild vulcanization conditions by copolymerizing isoprene monomer, which is a raw material of isoprene rubber, and chloroprene monomer. Patent Literature 5 describes an isoprene/chloroprene-based polymer dip-molded article that exhibits excellent flexibility without containing a diphenylguanidine-based reagent as a vulcanization accelerator by mixing an isoprene-based polymer latex with a chloroprene-based polymer latex. Patent Literature 6 describes a dip-molded article that exhibits excellent mechanical properties by mixing a nitrile-butadiene-based polymer (NBR) latex or an isoprene-based polymer latex with a chloroprene-based polymer latex as a base.

[Math. 1]

$$\frac{4.0}{100} \leqq \frac{A}{B-C} \leqq \frac{5.8}{100} \quad \cdots \quad (\mathrm{I})$$

### Citation List

#### Patent Literature

[Patent Literature 1] JP-A-2014-114342
[Patent Literature 2] WO2019/009038
[Patent Literature 3] JP-A-2019-143002
[Patent Literature 4] WO2021/132460
[Patent Literature 5] JP-A-2017-508840 (Translation of PCT Application)
[Patent Literature 6] JP-A-2020-189963

### Summary of Invention

#### Technical Problem

Chloroprene-based polymer compositions containing a chloroprene-based polymer have been widely used in applications such as gloves, balloons, boots and catheters. Further, especially in medical rubber glove applications, there is a tendency to require a chloroprene-based polymer composition capable of obtaining a dip-molded article having an excellent flexibility as well as an excellent tensile strength at break, as with dip-molded articles obtained using natural rubber or polyisoprene. In addition, for example, when the production conditions of the chloroprene-based polymer

composition were adjusted to obtain a dip-molded article having a low modulus at 100% elongation, the chloroprene-based polymer composition obtained after polymerization may have been sticky and adhered to the polymerization container, resulting in a low recovery rate.

The present invention has been made in view of these circumstances, and aims to provide a method for producing a chloroprene-based polymer composition capable of obtaining a dip-molded article having a high recovery rate from a polymerization container, a low modulus at 100% elongation, and an excellent tensile strength at break.

**Solution to Problem**

According to the present invention, provided is a method for producing a chloroprene-based polymer composition, in which the chloroprene-based polymer composition contains a diene-based polymer A and a chloroprene-based polymer B, a weight average molecular weight of the diene-based polymer A is different from a weight average molecular weight of the chloroprene-based polymer B, and the method comprises a polymerization step of forming the chloroprene-based polymer B via primerization in presence of the diene-based polymer A.

The inventors have conducted intensive studies and have found that by producing a chloroprene-based polymer composition containing a diene-based polymer A and a chloroprene-based polymer B with different weight average molecular weights by a production method including a polymerization step of forming the chloroprene-based polymer B via porimerization in the presence of the diene-based polymer A, the chloroprene-based polymer composition becomes a chloroprene-based polymer composition capable of obtaining a dip-molded article having a high recovery rate from a polymerization container, a low modulus at 100% elongation, and an excellent tensile strength at break, leading to the completion of the present invention.

Hereinafter, various embodiments of the present invention are exemplified. The following embodiments can be combined with each other.

Preferably, the above-described method for producing the chloroprene-based polymer composition, in which difference between the weight average molecular weight of the diene-based polymer A and the weight average molecular weight of the chloroprene-based polymer B is 100,000 or more.

Preferably, the above-described method for producing the chloroprene-based polymer composition, in which the weight average molecular weight of the diene-based polymer A is 5,000 to 80,000.

Preferably, the above-described method for producing the chloroprene-based polymer composition, in which, in the polymerization step of forming the chloroprene-based polymer B via poleymeriation, an amount of the diene-based polymer A charged is 5.0 to 60.0 parts by mass when an amount of chloroprene monomer or raw material monomer charged is taken as 100 parts by mass.

Preferably, the above-described method for producing the chloroprene-based polymer composition, in which the diene-based polymer A comprises at least one selected from a group consisting of natural rubber, isoprene-based polymer, butadiene-based polymer, styrene butadiene-based polymer, chloroprene-based polymer, and acrylonitrile butadiene-based polymer.

**Advantageous Effects of Invention**

According to the chloroprene-based polymer of the present invention, a chloroprene-based polymer composition capable of obtaining a dip-molded article having a high recovery rate from a polymerization container, a low modulus at 100% elongation, and an excellent tensile strength at break can be obtained.

**Description of Embodiments**

Hereinafter, embodiments of the present invention will be exemplified to describe the present invention in detail. The present invention is not limited at all by these descriptions. Various distinctive features of embodiments of the present invention shown below can be combined with each other. In addition, the invention can be made independently for each distinctive feature.

1. Method for Producing Chloroprene-based Polymer Composition

The method for producing a chloroprene-based polymer composition of the present invention includes a polymerization step of forming a chloroprene-based polymer B via polymerization in the presence of a diene-based polymer A. Further, the chloroprene-based polymer composition of the present invention contains the diene-based polymer A and the chloroprene-based polymer B. The diene-based polymer A and the chloroprene-based polymer B have different weight average molecular weights.

First, the diene-based polymer A and the chloroprene-based polymer B of the present invention will be described

below.

1.1 Diene-based Polymer A

In the present invention, the diene-based polymer A means a polymer containing a diene-based monomer unit derived from a diene-based monomer. The diene-based polymer A may contain a monomer unit derived from a monomer other than the diene-based monomer and the like to the extent that the purpose of the present invention is not impaired.
The diene-based polymer A of one embodiment of the present invention can contain 50 to 100 mass% of the monomer unit derived from the diene-based monomer when the amount of the diene-based polymer A is taken as 100 mass%, and preferably contains 70 to 100 mass%. The content of the monomer unit derived from the diene-based monomer is, for example, 50, 55, 60, 65, 70, 75, 80, 85, 90, 91, 92, 93, 94, 95, 96, 97, 98, 99, or 100 mass%, and may be in the range between the two values exemplified herein.
The diene-based monomer can be a conjugated diene monomer having 4 to 6 carbon atoms, and specific examples thereof include 1,3-butadiene, isoprene, 2,3-dimethyl-1,3-butadiene, 1,3-pentadiene, chloroprene, 2,3-dichloro-1,3-butadiene, and 1-chloro-1,3-butadiene. The diene-based polymer A preferably contains a chloroprene monomer unit.
The diene-based polymer A of one embodiment of the present invention preferably includes at least one selected from the group consisting of natural rubber, isoprene-based polymer, butadiene-based polymer, styrene butadiene-based polymer, chloroprene-based polymer and acrylonitrile butadiene-based polymer.
The diene-based polymer A of one embodiment of the present invention preferably contains a monomer unit derived from chloroprene. Further, it preferably contains a monomer unit derived from 2,3-dichloro-1,3-butadiene. The diene-based polymer A of one embodiment of the present invention may not contain sulfur, and the chloroprene-based polymer of one embodiment of the present invention may not have an -S-S-structure caused by sulfur in the main chain.
The diene polymer A of one embodiment of the present invention can contain 50 to 100 mass% of the monomer unit derived from chloroprene when the amount of the diene-based polymer A is taken as 100 mass%, and preferably contains 70 to 100 mass%. The content of the monomer unit derived from chloroprene is, for example, 50, 55, 60, 65, 70, 75, 80, 85, 90, 91, 92, 93, 94, 95, 96, 97, 98, 99, or 100 mass%, and may be in the range between the two values exemplified herein.
The diene-based polymer A of one embodiment of the invention can contain 0 to 30 mass% of the monomer unit derived from 2,3-dichloro-1,3-butadiene when the amount of the diene-based polymer A is taken as 100 mass%. The content of the monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 mass%, and may be in the range between the two values exemplified herein.
The diene-based polymer A of the present invention has a different weight average molecular weight from the chloroprene-based polymer B. The difference between the weight average molecular weight of the diene-based polymer A of one embodiment of the present invention and the weight average molecular weight of the chloroprene-based polymer B described below is preferably 100,000 or more, and more preferably 400,000 or more. The difference between the weight average molecular weight of the diene-based polymer A and the weight average molecular weight of the chloroprene-based polymer B described below is, for example, 100,000, 200,000, 300,000, 400,000, 500,000, 600,000, 700,000, 800,000, 900,000, 1,000,000, 1,200,000, 1,300,000, 1,400,000, or 1,500,000, and may be in the range between the two values exemplified herein.
As an example, the weight average molecular weight of the diene-based polymer A can be smaller than that of the chloroprene-based polymer B. The weight average molecular weight of the diene-based polymer A can be 5,000 to 80,000. The weight average molecular weight of the diene-based polymer A is, for example, 5,000, 6,000, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.
As another example, the weight average molecular weight of the diene-based polymer A can be larger than that of the chloroprene-based polymer B. The weight average molecular weight of the diene-based polymer A can be 200,000 to 1,500,000. The weight average molecular weight of the diene-based polymer A is, for example, 200,000, 300,000, 400,000, 500,000, 600,000, 700,000, 800,000, 900,000, 1,000,000, 1,100,000, 1,200,000, 1,300,000, 1,400,000, or 1,500,000, and may be in the range between the two values exemplified herein.
The weight average molecular weight of the diene-based polymer A can be determined by analyzing the sample using gel permeation chromatography (GPC), the sample obtained by mixing a polymerization solution containing the diene-based polymer A, such as latex, with a large amount of methanol for precipitation, filtering and drying the precipitate to obtain the diene-based polymer A, and dissolving it in tetrahydrofuran. The GPC measurement conditions can be as described in Examples. The weight average molecular weight of the diene-based polymer A can be controlled in the polymerization of the diene polymer A by adjusting the polymerization formulation, formulation such as type and amount of

chain transfer agent, polymerization temperature, polymerization time, and polymerization conversion rate, and the like, with particular control achieved by adjusting the type and amount of chain transfer agent.

1.2 Method for Producing Diene-based Polymer A

The method for producing the diene-based polymer A of the present invention is not particularly limited. As an example, the method for producing the diene-based polymer A of one embodiment of the present invention can include a diene-based polymer A polymerization step in which raw material monomers including a diene-based monomer are polymerized to obtain a diene-based polymer.

In the polymerization step, the raw material monomer includes one or more diene-based monomers, and can also include other monomers copolymerizable with the diene-based monomer. Examples of the diene-based monomer include 1,3-butadiene, isoprene, 2,3-dimethyl-1,3-butadiene, 1,3-pentadiene, chloroprene, 2,3-dichloro-1,3-butadiene, and 1-chloro-1,3-butadiene. Examples of the other monomer include copolymerizable with the diene-based monomer include styrene, methacrylic acid, acrylonitrile, and sulfur.

The type and amount of each monomer charged are preferably adjusted so that the content ratio of each monomer unit in the obtained diene-based polymer A is within the numerical range described above. As an example, if the diene-based polymer A contains the chloroprene monomer unit and the 2,3-dichloro-1,3-butadiene monomer unit, and the content of the 2,3-dichloro-1,3-butadiene monomer unit is 0 to 30 mass% with respect to 100 mass% of the total of the chloroprene monomer unit and the 2,3-dichloro-1,3-butadiene monomer unit, the amount of 2,3-dichloro-1,3-butadiene charged is preferably in the range of 0 to 30 parts by mass with respect to 100 parts by mass of the total of the chloroprene monomer and the 2,3-dichloro-1,3-butadiene monomer.

When producing the diene-based polymer A, the raw material monomers are polymerized by a polymerization method such as emulsion polymerization, solution polymerization, suspension polymerization, and bulk polymerization. Among these polymerization methods, emulsion polymerization is preferred because it has various advantages such as easy control, easy removal of polymer from the polymerization-completed solution and relatively high polymerization rate.

In the polymerization step of the diene-based polymer A, the raw material monomers can be polymerized by supplying them into a polymerization container together with a polymerization initiator as well as a chain transfer agent and a necessary agent such as solvent. As an example, in the case where the diene-based polymer A is polymerized by emulsion polymerization, the raw material monomers are polymerized by supplying them into a reaction vessel together with a chain transfer agent, water, alkali (e.g., metal hydroxides such as potassium hydroxide and sodium hydroxide), an emulsifier (dispersing agent), a reducing agent (e.g., sodium hydrogen sulfite), a polymerization initiator and the like.

The polymerization initiator is not particularly limited, and a known polymerization initiator commonly used for the polymerization of diene-based polymers can be used. Examples of the polymerization initiator include organic peroxides such as potassium persulfate, ammonium persulfate, sodium persulfate, hydrogen peroxide, and t-butyl hydroperoxide.

The type of chain transfer agent used in emulsion polymerization is not particularly limited, and those commonly used in the polymerization of diene-based polymers can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, and iodoform. As the chain transfer agent, long chain alkyl mercaptans are preferred, and n-dodecyl mercaptan is more preferred.

By adjusting the type and amount of the chain transfer agent, the weight average molecular weight of the obtained diene-based polymer A can be adjusted.

As an example, to obtain the diene-based polymer A having the weight average molecular weight of 5,000 to 80,000, the amount of the chain transfer agent charged before the start of emulsion polymerization is preferably set to 0.5 to 10.0 parts by mass with respect to 100 parts by mass of monomers. In this case, the amount of the chain transfer agent charged is, for example, 0.5, 1.0, 2.0, 3.0, 4.0, 5.0, 6.0, 7.0, 8.0, 9.0, or 10.0 parts by mass, and may be in the range between the two values exemplified herein.

Further, as an example, to obtain the diene-based polymer A having the weight average molecular weight of 200,000 or more, preferably 500,000 to 1,500,000, the amount of the chain transfer agent charged is preferably set to 0 parts by mass or more and less than 0.40 parts by mass with respect to 100 parts by mass of monomers. The amount of the chain transfer agent charged is more preferably 0.02 to 0.05 parts by mass, for example, 0, 0.005, 0.01, 0.02, 0.03, 0.04, 0.05, 0.06, 0.07, 0.08, 0.09, 0.10, 0.20, 0.30, or less than 0.40 parts by mass, and may be in the range between the two values exemplified herein. In particular, when attempting to obtain the diene-based polymer A having the weight average molecular weight of 200,000 or more, the chain transfer agent may not be used.

In the case of emulsion polymerization, the pH of the aqueous emulsion solution is preferably 10.5 to 13.5. The aqueous emulsion solution refers to the mixture of a chain transfer agent and monomers just before the start of emulsion polymerization, and also includes the case where the composition of each component changes due to the post addition or dividing addition of each component. When the pH of the aqueous emulsion solution at the start of emulsion polymerization is 10.5 or higher, the polymerization reaction can be controlled more stably. When the pH is 13.5 or lower, an excessive

increase in viscosity during polymerization is suppressed and the polymerization reaction can be controlled more stably.

In the polymerization step, monomers can include chloroprene and 2,3-dichloro-1,3-butadiene, and can also include other monomers copolymerizable with chloroprene and 2,3-dichloro-1,3-butadiene. The other monomers are as described above as monomer units that may be contained in the chloroprene-based polymer. Further, the type and amount of each monomer charged is preferably adjusted so that the content ratio of each monomer unit in the obtained chloroprene-based polymer is within the above-described numerical range.

The emulsifier preferably includes a rosin acid and/or a rosin acid salt. Examples of the rosin acid salt include alkali metal salts such as sodium salts and potassium salts. The amount of the rosin acid and the rosin acid salt added can be 3.0 to 7.0 parts by mass with respect to 100 parts by mass of the monomers used. The amount of the rosin acid and the rosin acid salt added is, for example, 3.0, 3.5, 4.0, 4.5, 5.0, 5.5, 6.0, 6.5, or 7.0 parts by mass, and may be in the range between the two values exemplified herein.

The emulsifier can also include emulsifiers or dispersing agents other than the rosin acids and rosin acid salts. As the emulsifier or dispersing agent other than the rosin acids and rosin acid salts, ationic, anionic, and nonionic emulsifiers and dispersing agents can be used. In one embodiment of the present invention, the emulsifiers used in the emulsion polymerization step can include the rosin acids and/or rosin acid salts, and anionic emulsifiers or dispersing agents. As the anionic emulsifier or dispersing agent, sulfate and sulfonate-based anionic emulsifiers or dispersing agents are preferably used in combination from the viewpoint of stabilizing chloroprene-based polymer latex when adding a pH adjusting agent. Specifically, alkyl sulfonates having 8 to 20 carbon atoms, alkyl aryl sulfates, condensation products of sodium β-naphthalene sulfonate and formaldehyde, and sodium alkyl diphenyl ether disulfonate can be mentioned. The amount of the anionic emulsifier or dispersing agent added can be 0.05 to 5 parts by mass with respect to 100 parts by mass of raw material monomers. The amount of anionic emulsifier or dispersing agent added is, for example, 0.05, 0.1, 0.2, 0.3, 0.5, 1.0, 1.5, 2.0, 2.5, 3.0, 3.5, 4.0, 4.5, or 5.0 parts by mass with respect to 100 parts by mass of raw material monomers, and may be in the range between the two values exemplified herein.

The polymerization temperature is preferably within the range of 5 to 55°C, because the emulsion solution does not freeze at 5°C or higher and there is no evaporation or boiling of the diene-based monomers at 55°C or lower.

The polymerization conversion rate is preferably in the range of 50 to 95%. The polymerization reaction is stopped by adding a polymerization terminator. When the desired polymerization conversion rate is reached, the polymerization reaction can be stopped by adding a polymerization terminator to stop the polymerization reaction, or the polymerization conversion rate can be adjusted by stopping the addition of the polymerization initiator.

Examples of the polymerization terminator include diethylhydroxylamine, thiodiphenylamine, 4-tert-butylcatechol, and 2,2'-methylenebis-4-methyl-6-tert-butylphenol. In the polymerization step of the diene-based polymer A of one embodiment of the present invention, a polymerization terminator may not be used. Unreacted monomers after polymerization can be removed by a conventional method such as distillation under reduced pressure.

In addition, a freeze stabilizer, an emulsion stabilizer, a viscosity modifier, an antioxidant, a preservative or the like can be optionally added after polymerization to the composition containing the diene-based polymer A obtained by the production method of one embodiment of the present invention (e.g., latex), to the extent that the effect of the present invention is not impaired.

In the polymerization step of the diene-based polymer A, the polymerization can start after all of the raw monomers and agents that are used in the polymerization step are charged before the start of polymerization, and at least a part of the raw material monomers and/or agents that are used in the polymerization step before the start of polymerization can be charged to the polymerization container, and the remainder can also be dividedly added after polymerization.

When at least a part of the raw material monomers and agents are charged to the polymerization container before the start of polymerization, and the remaining raw material monomers and/or agents are added after the start of polymerization, the remaining raw material monomers and/or agents can be added at batch, dividedly added several times, or continuously added at a constant flow rate. In one embodiment of the present invention, at least a part of the raw material monomers can be dividedly added after the start of polymerization. As an example, when chloroprene and 2,3-dichloro-1,3-butadiene are used as raw material monomers, a part of chloroprene can be dividedly added after the start of polymerization.

As an example, dividing addition of the remaining raw material monomers and/or agents can start when the polymerization rate of the raw material monomer charged before the start of polymerization reaches 50 to 95%. The polymerization rate at the start of dividing addition can be, for example, 50, 55, 60, 65, 70, 75, 80, 85, 90, or 95%, and may be in the range between the two values exemplified herein.

In the case where at least a part of the raw material monomers is added after the start of polymerization, 50 parts by mass or less of 100 mass parts of all raw material monomers used in the polymerization step can be added after the start of polymerization. In this case, the amount of raw material monomer added after the start of polymerization can be, for example, 0, 5, 10, 15, 20, 25, 30, 35, 40, 45, or 50 parts by mass, and may be in the range between the two values exemplified herein. As an example, the dividing addition of the raw material monomer, e.g., chloroprene, can be performed continuously over a period of 30 to 300 minutes.

1.3 Chloroprene-based Polymer B

In the present invention, chloroprene-based polymer means a polymer containing the monomer unit derived from 2-chloro-1,3-butadiene (hereinafter referred to as chloroprene). The chloroprene-based polymer of one embodiment of the present invention can also be a copolymer of chloroprene and other monomers copolymerizable with chloroprene. Examples of the other monomer include 1-chloro-1,3-butadiene, 2,3-dichloro-1,3-butadiene, isoprene, styrene, methacrylic acid, acrylonitrile, and sulfur, and two or more types of these may be used in combination as the other monomers. The chloroprene-based polymer B of one embodiment of the present invention preferably contains the monomer unit derived from 2,3-dichloro-1,3-butadiene. The chloroprene-based polymer B of one embodiment of the present invention may not contain sulfur, and the chloroprene-based polymer B of one embodiment of the present invention may not have an -S-S-structure caused by sulfur in the main chain.

The chloroprene-based polymer B of one embodiment of the present invention can contain 50 to 100 mass% of the monomer unit derived from chloroprene when the amount of the chloroprene-based polymer B is taken as 100 mass%, and preferably contains 70 to 100 mass%. The content of the monomer unit derived from chloroprene is, for example, 50, 55, 60, 65, 70, 75, 80, 85, 90, 91, 92, 93, 94, 95, 96, 97, 98, 99, or 100 mass%, and may be in the range between the two values exemplified herein.

The chloroprene-based polymer B of one embodiment of the present invention can contain 0 to 30 mass% of the monomer unit derived from 2,3-dichloro-1,3-butadiene when the amount of the chloroprene-based polymer B is taken as 100 mass%. The content of the monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 mass%, and may be in the range between the two values exemplified herein.

The chloroprene-based polymer B of the present invention has a different weight average molecular weight from the diene-based polymer A. As mentioned above, the difference between the weight average molecular weight of the diene-based polymer A of one embodiment of the present invention and the weight average molecular weight of the chloroprene-based polymer B described below is preferably 100,000 or more, and more preferably 400,000 or more.

As an example, the weight average molecular weight of the chloroprene-based polymer B can be larger than that of the diene-based polymer A. The weight average molecular weight of the chloroprene-based polymer B can be 200,000 to 1,500,000. The weight average molecular weight of the chloroprene-based polymer B is, for example, 200,000, 300,000, 400,000, 500,000, 600,000, 700,000, 800,000, 900,000, 1,000,000, 1,100,000, 1,200,000, 1,300,000, 1,400,000, or 1,500,000, and may be in the range between the two values exemplified herein.

As another example, the weight average molecular weight of the chloroprene-based polymer B can be smaller than the molecular weight of the diene-based polymer A. The weight average molecular weight of the chloroprene-based polymer B can be 5,000 to 80,000. The weight average molecular weight of the chloroprene-based polymer B is, for example, 5,000, 6,000, 7,000, 8,000, 9,000, 10,000, 11,000, 12,000, 13,000, 14,000, 15,000, 16,000, 17,000, 18,000, 19,000, 20,00 0, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

The weight average molecular weight of the chloroprene-based polymer B can be determined by analyzing the sample using gel permeation chromatography (GPC), the sample obtained by mixing a polymerization solution containing the chloroprene-based polymer B, such as chloroprene-based polymer composition (latex), with a large amount of methanol for precipitation, filtering and drying the precipitate to obtain the chloroprene-based polymer B, and dissolving it in tetrahydrofuran. The GPC measurement conditions can be as described in Examples. The weight average molecular weight of the chloroprene-based polymer B can be controlled in the polymerization of the chloroprene-based polymer B by adjusting the polymerization formulation, formulation such as type and amount of chain transfer agent, polymerization temperature, polymerization time, and polymerization conversion rate, and the like, with particular control achieved by adjusting the type and amount of chain transfer agent.

1.4 Polymerization Method of Chloroprene-based Polymer B

The method for producing a chloroprene-based polymer composition of the present invention includes a polymerization step of forming the chloroprene-based polymer B via polymerization in the presence of the diene-based polymer A.

According to the present invention, by polymerizing the chloroprene-based polymer B in the presence of the diene-based polymer A, it is possible to obtain the chloroprene-based polymer composition capable of obtaining a dip-molded article having a high recovery rate from the polymerization container, a low modulus at 100% elongation, and an excellent tensile strength at break.

The mechanism, by which the chloroprene-based polymer composition capable of obtaining a dip-molded article having a high recovery rate from the polymerization container, a low modulus at 100% elongation, and an excellent tensile strength at break can be obtained by polymerizing the chloroprene-based polymer B in the presence of the diene-based

polymer A, is not necessarily clear. However, since the diene-based polymer A and chloroprene-based polymer B are mixed more highly uniformly in the chloroprene-based polymer composition obtained by polymerizing the chloroprene-based polymer B in the presence of the diene-based polymer A than in the chloroprene-based polymer composition obtained by separately polymerizing the diene-based polymer A and the chloroprene-based polymer B and mixing them after the polymerization, it is presumed that the obtained chloroprene-based polymer composition and the obtained dip-molded article have excellent physical properties.

The diene-based polymer A may be added to the polymerization solution in any form. For example, the polymerization solution in which the diene-based polymer A has been polymerized may be used as is. As an example, when the diene-based polymer A is polymerized by emulsion polymerization, a latex containing the diene-based polymer A may be added to the polymerization solution of the chloroprene-based polymer B. Further, for example, the diene-based polymer A may be precipitated from the polymerization solution in which the diene-based polymer A has been polymerized, and the precipitated diene-based polymer A may be added to the polymerization solution of the chloroprene-based polymer B. As an example, when the diene-based polymer A is polymerized by emulsion polymerization, the diene-based polymer A may be precipitated with methanol from the latex containing the diene-based polymer A and added to the polymerization solution of the chloroprene-based polymer B, or the diene-based polymer A obtained by freeze-drying the latex containing the diene-based polymer A may be added to the polymerization solution of the chloroprene-based polymer B.

In the polymerization step of forming the chloroprene-based polymer B via polymerization, when the amount of the chloroprene monomer (or raw material monomer) charged is taken as 100 parts by mass, the amount of the diene-based polymer A charged can be 5.0 to 60.0 parts by mass, or 40.0 to 95.0 parts by mass.

In one embodiment of the present invention, when the weight average molecular weight of the diene-based polymer A is smaller than that of the chloroprene-based polymer B, for example, when the weight average molecular weight of the diene-based polymer A is 5,000 to 80,000, the amount of the diene-based polymer A charged can be 5.0 to 60.0 parts by mass with respect to 100 parts by mass of the amount of the chloroprene monomer (or raw material monomer) charged, and when the molecular weight of the diene-based polymer A is larger than that of the chloroprene-based polymer B, for example, when the weight average molecular weight of the diene-based polymer A is 200,000 to 1,500,000, the amount of the diene-based polymer A charged can be 40.0 to 95.0 parts by mass with respect to 100 parts by mass of the chloroprene monomer (or raw material monomer) charged.

When the weight average molecular weight of the diene-based polymer A is smaller than that of the chloroprene-based polymer B, the amount of the diene-based polymer A charged with respect to 100 parts by mass of the chloroprene polymer (or raw material monomer) charged is, for example, 5.0, 10.0, 15.0, 20.0, 25.0, 30.0, 35.0, 40.0, 50.0, or 60.0 parts by mass, and may be in the range between the two values exemplified herein. When the molecular weight of the diene-based polymer A is larger than that of the chloroprene-based polymer B, the amount of the diene-based polymer A charged with respect to 100 parts by mass of the chloroprene polymer (or raw material monomer) charged is, for example, 40.0, 50.0, 60.0, 65.0, 70.0, 75.0, 80.0, 85.0, 90.0, or 95.0 parts by mass, and may be in the range between the two values exemplified herein.

In the polymerization step, the raw monomers include chloroprene, and can also include other monomers copolymerizable with chloroprene. Examples of the other monomer include 1-chloro-1,3-butadiene, 2,3-dichloro-1,3-butadiene, 1,3-butadiene, isoprene, 2,3-dimethyl-1,3-butadiene, 1,3-pentadiene, styrene, methacrylic acid, acrylonitrile, and sulfur.

The type and amount of each monomer charged are preferably adjusted so that the content ratio of each monomer unit in the obtained chloroprene-based polymer B is within the numerical range described above.

When producing the chloroprene-based polymer B, the raw material monomer is polymerized by a polymerization method such as emulsion polymerization, solution polymerization, suspension polymerization, and bulk polymerization. Among these polymerization methods, emulsion polymerization is preferable because it has various advantages such as easy control, easy removal of polymer from the polymerization-completed solution and relatively high polymerization rate.

In the polymerization step of the chloroprene-based polymer B, the raw material monomers can be polymerized by supplying them into a polymerization container together with a polymerization initiator as well as a chain transfer agent and a necessary agent such as solvent. As an example, in the case where the chloroprene-based polymer B is polymerized by emulsion polymerization, the raw material monomers are polymerized by supplying them into a reaction vessel together with a chain transfer agent, water, alkali (e.g., metal hydroxides such as potassium hydroxide and sodium hydroxide), an emulsifier (dispersing agent), a reducing agent (e.g., sodium hydrogen sulfite), a polymerization initiator and the like.

The polymerization initiator is not particularly limited, and a known polymerization initiator commonly used for the polymerization of chloroprene-based polymers can be used. Examples of the polymerization initiator include organic peroxides such as potassium persulfate, ammonium persulfate, sodium persulfate, hydrogen peroxide, and t-butyl hydroperoxide.

The type of chain transfer agent used in emulsion polymerization is not particularly limited, and those commonly

used in the polymerization of chloroprene can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, and iodoform. As the chain transfer agent, long chain alkyl mercaptans are preferred, and n-dodecyl mercaptan is more preferred.

By adjusting the type and amount of the chain transfer agent, the weight average molecular weight of the obtained chloroprene-based polymer B can be adjusted.

As an example, to obtain the chloroprene-based polymer B having the weight average molecular weight of 200,000 or more, preferably 500,000 to 1,500,000, the amount of the chain transfer agent charged is preferably set to 0 parts by mass or more and less than 0.40 parts by mass with respect to 100 parts by mass of monomers. The amount of the chain transfer agent charged is more preferably 0 to 0.05 parts by mass, for example, 0, 0.005, 0.01, 0.02, 0.03, 0.04, 0.05, 0.06, 0.07, 0.08, 0.09, 0.10, 0.20, 0.30 pats by mass, or less than 0.40 parts by mass, and may be in the range between the two values exemplified herein. In particular, when attempting to obtain the chloroprene-based polymer B having the weight average molecular weight of 200,000 or more, the chain transfer agent may not be used.

Further, as an example, to obtain the chloroprene-based polymer B having the weight average molecular weight of 5,000 to 80,000, the amount of the chain transfer agent charged before the start of emulsion polymerization is preferably set to 0.5 to 10.0 mass parts with respect to 100 parts by mass of monomers. In this case, the amount of the chain transfer agent charged before the start of emulsion polymerization is, for example, 0.5, 1.0, 2.0, 3.0, 4.0, 5.0, 6.0, 7.0, 8.0, 9.0, or 10.0 parts by mass, and may be in the range between the two values exemplified herein.

By adjusting the weight average molecular weights of the diene-based polymer A and the chloroprene-based polymer B within the above numerical ranges and by adjusting the amount of the diene-based polymer A charged with respect to 100 parts by mass of chloroprene monomer charged within the above numerical range, the chloroprene-based polymer composition, which is to be made into a dip-molded article having a low modulus at 100% elongation and an excellent tensile strength at break, is obtained.

In the case of emulsion polymerization, the pH of the aqueous emulsion solution is preferably 10.5 to 13.5. The aqueous emulsion solution refers to the mixture of a chain transfer agent and monomers just before the start of emulsion polymerization, and also includes the case where the composition of each component changes due to the post addition or dividing addition of each component. When the pH of the aqueous emulsion solution at the start of emulsion polymerization is 10.5 or higher, the polymerization reaction can be controlled more stably. When the pH is 13.5 or lower, an excessive increase in viscosity during polymerization is suppressed and the polymerization reaction can be controlled more stably.

In the polymerization step, monomers can include chloroprene and 2,3-dichloro-1,3-butadiene, and can also include other monomers copolymerizable with chloroprene and 2,3-dichloro-1,3-butadiene. The other monomers are as described above as monomer units that may be contained in the chloroprene-based polymer. Further, the type and amount of each monomer is preferably adjusted so that the content ratio of each monomer unit in the obtained chloroprene-based polymer is within the above-described numerical range.

The emulsifier preferably includes a rosin acid and/or a rosin acid salt. Examples of the rosin acid salt include alkali metal salts such as sodium salts and potassium salts. The amount of the rosin acid and the rosin acid salt added can be 3.0 to 7.0 parts by mass with respect to 100 parts by mass of the monomers used. The amount of the rosin acid and the rosin acid salt added is, for example, 3.0, 3.5, 4.0, 4.5, 5.0, 5.5, 6.0, 6.5, or 7.0 parts by mass, and may be in the range between the two values exemplified herein.

The emulsifier can also include an emulsifier or a dispersing agent other than the rosin acids and rosin acid salts. As the emulsifier or dispersing agent other than the rosin acids and rosin acid salts, ationic, anionic, and nonionic emulsifiers and dispersing agents can be used. In one embodiment of the present invention, the emulsifiers used in the emulsion polymerization step can include the rosin acids and/or rosin acid salts, and anionic emulsifiers or dispersing agents. As the anionic emulsifier or dispersing agent, sulfate and sulfonate-based anionic emulsifiers or dispersing agents are preferably used in combination from the viewpoint of stabilizing chloroprene-based polymer latex when adding the pH adjusting agent. Specifically, alkyl sulfonates having 8 to 20 carbon atoms, alkyl aryl sulfates, condensation products of sodium β-naphthalene sulfonate and formaldehyde, and sodium alkyl diphenyl ether disulfonate can be mentioned. The amount of the anionic emulsifier or dispersing agent added can be 0.05 to 5 parts by mass with respect to 100 parts by mass of raw material monomers. The amount of anionic emulsifier or dispersing agent added is, for example, 0.05, 0.1, 0.2, 0.3, 0.5, 1.0, 1.5, 2.0, 2.5, 3.0, 3.5, 4.0, 4.5, or 5.0 parts by mass with respect to 100 parts by mass of raw material monomers, and may be in the range between the two values exemplified herein.

The polymerization temperature is preferably within the range of 5 to 55°C, because the emulsion solution does not freeze at 5°C or higher and there is no evaporation or boiling of chloroprene monomers at 55°C or lower.

The polymerization conversion rate is preferably in the range of 50 to 95%. The polymerization reaction is stopped by adding a polymerization terminator. When the desired polymerization conversion rate is reached, the polymerization reaction can be stopped by adding a polymerization terminator to stop the polymerization reaction.

Examples of the polymerization terminator include diethylhydroxylamine, thiodiphenylamine, 4-tert-butylcatechol, and 2,2'-methylenebis-4-methyl-6-tert-butylphenol. Unreacted monomers after polymerization can be removed by a

conventional method such as distillation under reduced pressure.

In addition, a freeze stabilizer, an emulsion stabilizer, a viscosity modifier, an antioxidant, a preservative or the like can be optionally added after polymerization to the chloroprene-based polymer composition containing the diene-based polymer A and the chloroprene-based polymer B obtained by the production method of one embodiment of the present invention (e.g., latex), to the extent that the effect of the present invention is not impaired.

In the polymerization step of the chloroprene-based polymer B, the polymerization can start after all of the raw monomers and agents that are used in the polymerization step before the start of polymerization are charged, and at least a part of the raw material monomers and/or agents that are used in the polymerization step before the start of polymerization can be charged to the polymerization vessel, and the remainder can also be dividedly added after polymerization.

When at least a part of the raw material monomers and agents are charged in the polymerization container before the start of polymerization, and the remaining raw material monomers and/or agents are added after the start of polymerization, the remaining raw material monomers and/or agents can be added at batch, dividedly added several times, or continuously added at a constant flow rate. In one embodiment of the present invention, at least a part of the raw material monomers can be dividedly added after the start of polymerization. As an example, a part of the polymerization initiator can be dividedly added after the start of polymerization.

1.5 Chloroprene-based Polymer Composition

The chloroprene-based polymer composition of one embodiment of the present invention contains the diene-based polymer A and the chloroprene-based polymer B. The diene-based polymer A and the chloroprene-based polymer B have different weight average molecular weights.

For the chloroprene-based polymer composition of one embodiment of the present invention, in the molecular wight distribution obtained by gel permeation chromatography measurement of the sample obtained by mixing chloroprene-based polymer composition with a large amount of methanol for precipitation, filtering and drying the precipitate to obtain polymers, and dissolving the polymers in tetrahydrofuran, it is preferred that the peaks with a weight average molecular weight of 5,000 to 80,000 and the peaks with a weight average molecular weight of 200,000 to 1,500,000 be detected, it is more preferred that the peaks with a weight average molecular weight of 5,000 to 50,000 and the peaks with a weight average molecular weight of 300,000 to 1,500,000 be detected, and it is even more preferred that the peaks with a weight average molecular weight of 8,000 to 30,000 and the peaks with a weight average molecular weight of 500,000 to 1,500,000 be detected. Further, the chloroprene-based polymer composition of one embodiment of the present invention preferably contains the diene-based polymer A having a weight average molecular weight of 5,000 to 80,000 and the chloroprene-based polymer B having a weight average molecular weight of 200,000 to 1,500,000, or the chloroprene-based polymer B having a weight average molecular weight of 5,000 to 80,000 and the diene-based polymer A having a weight average molecular weight of 200,000 to 1,500,000, more preferably contains the diene-based polymer A having a weight average molecular weight of 5,000 to 50,000 and the chloroprene-based polymer B having a weight average molecular weight of 300,000 to 1,500,000, or the chloroprene-based polymer B having a weight average molecular weight of 5,000 to 50,000 and the diene-based polymer A having a weight average molecular weight of 300,000 to 1,500,000, and even more preferably contains the diene-based polymer A having a weight average molecular weight of 8,000 to 30,000 and the chloroprene-based polymer B having a weight average molecular weight of 500,000 to 1,500,000, or the chloroprene-based polymer B having a weight average molecular weight of 8,000 to 30,000 and the diene-based polymer A having a weight average molecular weight of 500,000 to 1,500,000.

The chloroprene-based polymer composition of one embodiment of the present invention preferably contains 5 to 40 mass% of the polymer having a weight average molecular weight of 5,000 to 80,000 when the amount of the polymer contained in the chloroprene-based polymer composition is taken as 100 mass%. The content ratio of the polymer having a weight average molecular weight of 5,000 to 80,000 can be, for example, 5, 10, 15, 20, 25, 30, 35, or 40 mass%, and may be in the range between the two values exemplified herein.

The chloroprene-based polymer composition of one embodiment of the present invention preferably contains 60 to 95 mass% of the polymer having a weight average molecular weight of 200,000 to 1,500,000 when the amount of the polymer contained in the chloroprene-based polymer composition is taken as 100 mass%. The content ratio of the polymer having a weight average molecular weight of 200,000 to 1,500,000 is, for example, 60, 65, 70, 75, 80, 85, 90, or 95 mass%, and may be in the range between the two values exemplified herein.

For the chloroprene-based polymer composition of one embodiment of the present invention, the recovery rate of the chloroprene-based polymer composition in the polymerization step of the chloroprene-based polymer B is preferably 95.0 mass% or more. The recovery rate is, for example, 95.0, 95.5, 96.0, 96.5, 97.0, 97.5, 98.0, 98.5, 99.0, 99.5, or 100.0 mass%, and may be in the range between the two values exemplified herein.

For the chloroprene-based polymer composition of one embodiment of the present invention, the adhesion of the chloroprene-based polymer composition to the polymerization container is reduced by polymerizing the chloroprene-based polymer B in the presence of the diene-based polymer A, thereby increasing the recovery rate. It should be noted

that the recovery rate of the chloroprene-based polymer composition in the polymerization step of the chloroprene-based polymer B can be determined by the method described in Examples.

For the chloroprene-based polymer composition of one embodiment of the present invention, the tensile strength at break of the dip-molded article obtained using the chloroprene-based polymer composition, which is measured in accordance with JIS K 6251, is preferably 18.0 MPa or higher, and more preferably 19.0 MPa or higher. The tensile strength at break is, for example, 18.0, 19.0, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be in the range between the two values exemplified herein.

For the chloroprene-based polymer composition of one embodiment of the present invention, the modulus at 100% elongation of the dip-molded article obtained using the chloroprene-based polymer composition, which is measured in accordance with JIS K 6251, is preferably 0.65 MPa or lower, and more preferably 0.60 MPa or lower. The modulus at 100% elongation is, for example, 0.30, 0.35, 0.40, 0.45, 0.50, 0.55, 0.60, or 0.65 MPa, and may be in the range between the two values exemplified herein.

It should be noted that the dip-molded article obtained by using the chloroprene-based polymer composition can be obtained through a dip-molding step of dip-molding a composition for forming a dip-molded body containing the chloroprene-based polymer composition to obtain a dip-molded body, and a drying step of heating and drying the dip-molded body at 140°C for 1 hour to obtain a dip-molded article. The composition for forming a dip-molded body contains the chloroprene-based polymer composition, and can contain other necessary agents such as metal oxides and antioxidants, and specifically can have the formulation shown in Examples. The dip-molded article can contain the diene-based polymer A and the chloroprene-based polymer B as base polymers. When the amount of dip-molded article is taken as 100 mass%, it can contain 70 mass% or more of the diene-based polymer A and the chloroprene-based polymer B, preferably contains 80 mass% or more, and even more preferably 90 mass% or more. When the amount of the dip-molded article is taken as 100 mass%, the content of the diene-based polymer A and the chloroprene-based polymer B in the dip-molded article is, for example, 70, 75, 80, 85, 90, 95, 96, 97, 98, 99, or 100 mass%, and may be in the range between the two values exemplified herein.

The tensile strength at break and modulus at 100% elongation of the dip-molded article containing the chloroprene-based polymer composition can be controlled by adjusting the polymerization condition, formulation ratio or the like of each polymer, such as the weight average molecular weights of the diene-based polymer A and the chloroprene-based polymer B contained in the dip-molded article, and the type and content ratio of the monomer units contained. It should be noted that the tensile strength at break and modulus at 100% elongation can be measured by the method described in Examples.

## 2. Method for Producing Dip-molded Article

The method for producing the dip-molded article of one embodiment of the present invention can include:

a dip-molding step of dip-molding a composition for forming a dip-molded body containing the above-described chloroprene-based polymer composition to obtain a dip-molded body; and
a drying step of heating and drying the dip-molded body to obtain a dip-molded article.

### 2.1 Composition for Forming Dip-molded Body

The composition for forming a dip-molded body of one embodiment of the present invention contains the above-described chloroprene-based polymer composition. The composition for forming a dip-molded body of one embodiment of the present invention may contain a metal oxide, an antioxidant, and other necessary agents, in addition to the chloroprene-based polymer composition. The composition for forming a dip-molded body of one embodiment of the present invention may not contain a vulcanizing agent and a vulcanization accelerator, and may not contain sulfur and a vulcanization accelerator such as thiuram-based, dithiocarbamate-based, thiourea-based, guanidine-based, xanthogenate-based, and thiazole-based vulcanization accelerators.

#### 2.1.1 Metal Oxide

The composition for forming a dip-molded body of one embodiment of the present invention can contain a metal oxide.

The metal oxide is not particularly limited, and examples thereof include zinc oxide, lead oxide, trilead tetroxide, magnesium oxide, aluminum oxide, iron oxide, beryllium oxide, and titanium oxide. The metal oxide preferably includes zinc oxide. Zinc oxide is generally considered to function as a scavenger for the dechlorination atoms of chloroprene-based polymers. In addition, one type of these metal oxides may be used alone, or two or more types of these may be mixed and used.

The amount of the metal oxide added is preferably 0.5 to 15.0 parts by mass, with respect to 100 parts by mass of the solid content of the chloroprene-based polymer composition contained in the composition for forming a dip-molded body. When the amount of the metal oxide added is 0.5 parts by mass or more, the tensile strength at break is expected to improve due to the crosslinking effect between the polymers. When the amount of the metal oxide added is 15.0 parts by mass or less, the dip-molded article with excellent flexibility can be obtained. Further, from the viewpoint of physical property balance between flexibility and tensile strength at break of the obtained dip-molded article, the amount of the metal oxide added is more preferably 0.5 to 5.0 parts by mass.

2.1.2 Antioxidant

The composition for forming a dip-molded body of one embodiment of the present invention can also contain an antioxidant. The antioxidant is not particularly limited, and phenolic antioxidants, amine antioxidants, heat-resistant oxidation (aging) antioxidants, ozone-resistant antioxidants, and the like can be used. When the obtained dip-molded article is used as a medical glove, a phenolic antioxidant can be used from the viewpoint of the color tone, texture, and hygiene of the dip-molded article. In particular, hindered phenolic antioxidants have the strong effect. Examples of the hindered phenolic antioxidant include 2,2' -methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferred from the viewpoint of being generally dispersible in aqueous materials. Further, one type of these compounds may be used alone, or two or more types of these may be mixed and used.

The amount of the antioxidant added is preferably 0.5 to 10.0 parts by mass, with respect to 100 parts by mass of the solid content of the chloroprene-based polymer composition contained in the composition for forming a dip-molded body. The amount of the antioxidant added is, for example, 1.0, 2.0, 3.0, 4.0, 5.0, 6.0, 7.0, 8.0, 9.0, or 10.0 parts by mass, and may be in the range between the two values exemplified herein. When the amount of the antioxidant added is 0.5 parts by mass or more, the effect of suppressing color tone change of the dip-molded article can be obtained. When the amount of the antioxidant added is 10.0 parts by mass or less, the stability of the composition for forming a dip-molded body is ensured. Further, from the viewpoint of physical property balance between flexibility and tensile strength at break of the obtained dip-molded article, the amount of the antioxidant added is more preferably 0.5 to 5.0 parts by mass.

2.1.3 Vulcanizing Agent and Vulcanization Accelerator

The composition for forming a dip-molded body of one embodiment of the present invention can also contain a vulcanizing agent and/or a vulcanization accelerator. In addition, the composition for forming a dip-molded body of one embodiment of the present invention may not contain sulfur and the vulcanization accelerator such as thiuram-based, dithiocarbamate-based, thiourea-based, guanidine-based, xanthate-based, and thiazole-based vulcanization accelerators. In other words, the composition for forming a dip-molded body includes those containing a vulcanizing agent but not containing a vulcanization accelerator, those not containing a vulcanizing agent but containing a vulcanization accelerator, those containing a vulcanizing agent and a vulcanization accelerator, and those not containing a vulcanizing agent and a vulcanization accelerator. Whether or not to incorporate a vulcanizing agent and a vulcanization accelerator may be determined depending on the intended dip-molded article.

Examples of the vulcanizing agent include sulfur, but the vulcanizing agent is not limited thereto. The amount of the vulcanizing agent added can be 0 to 10.0 parts by mass, with respect to 100 parts by mass of the solid content of the chloroprene-based polymer composition contained in the composition for forming a dip-molded body. The amount of the vulcanizing agent added is, for example, 0, 1, 2, 3, 4, 5, 6, 7, 8, 9, or 10 parts by mass, and may be in the range between the two values exemplified herein.

A vulcanization accelerator is an agent that is added during the vulcanization of raw rubber for the purpose of interacting with the vulcanizing agent to increase the vulcanization rate, shorten the vulcanization time, lower the vulcanization temperature, reduce the amount of vulcanizing agent, and improve the physical properties of the vulcanized rubber, and usually refers to an agent that accelerates the sulfur vulcanization reaction.

Examples of the vulcanization accelerator include thiuram-based, dithiocarbamate-based, thiourea-based, guanidine-based, xanthate-based, and thiazole-based vulcanization accelerators, but the vulcanization accelerator is not limited thereto. One type of these may be used alone, or two or more types of these may be used in combination as needed.

Examples of the thiuram-based vulcanization accelerator include tetramethylthiuram disulfide, tetraethylthiuram disulfide, tetrabutylthiuram disulfide, tetrakis(2-ethylhexyl) thiuram disulfide, tetramethylthiuram monosulfide, and dipentamethylenethiuram tetrasulfide.

Examples of the dithiocarbamate-based vulcanization accelerator include sodium dibutyldithiocarbamate, zinc

dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, and tellurium diethyldithiocarbamate. In particular, zinc dibutyldithiocarbamate is preferably used.

Examples of the thiourea-based vulcanization accelerator include ethylenethiourea, N,N'-diethylthiourea, trimethylthiourea, and N,N'-diphenylthiourea.

Examples of the guanidine-based vulcanization accelerator include 1,3-diphenylguanidine, 1,3-di-o-tolylguanidine, 1-o-tolylbiguanide, and di-o-tolylguanidine salt of dicatechol borate.

Examples of the xanthate-based vulcanization accelerator include zinc butylxanthate, and zinc isopropylxanthate.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, and 2-(4'-morpholinodithio) benzothiazole.

The amount of the vulcanization accelerator added can be 0 to 5.0 parts by mass, with respect to 100 parts by mass of the solid content of the chloroprene-based polymer composition contained in the composition for forming a dip-molded body. The amount of the vulcanization accelerator added is, for example, 0, 0.5, 1.0, 1.5, 2.0, 2.5, 3.0, 3.5, 4.0, 4.5, or 5.0, and may be in the range between the two values exemplified herein.

2.1.4 Other Agents (Heteroaromatic Ring Compound)

The composition for forming a dip-molded body of one embodiment of the present invention can contain a heteroaromatic ring compound in the chloroprene-based polymer.

The heteroaromatic ring compound contained in the composition for forming a dip-molded body used to obtain the dip-molded article of one embodiment of the present invention can be represented by chemical formula (1), and has a benzoimidazole structure. It should be noted that the compound having this structure may be employed mainly as a secondary anti-aging agent in the formulation of rubber composition.

[Chem. 1]

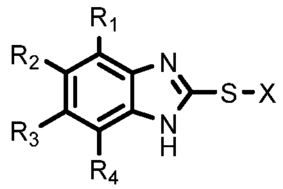

(1)

In chemical formula (1), X in the mercapto group represents a hydrogen atom or a metal atom. X can also be a hydrogen atom, giving a thiol group. X can also be a metal atom, and the examples of the metal atom include zinc, sodium, copper, nickel, and tellurium. Among these, zinc is preferred.

$R_1$ to $R_4$ in chemical formula (1) each represent a hydrogen atom, an alkyl group optionally having a substituted group, an ether group optionally having a substituted group, a nitro group, an amino group, or a carboxyl group. $R_1$ to $R_4$ may be the same as or different from each other. One type of the heteroaromatic ring compounds may be used alone, or two or more types of these may be mixed and used.

Examples of the heteroaromatic ring compound include 2-mercaptobenzoimidazole, 5-methyl-2-mercaptobenzoimidazole, 4-methyl-2-mercaptobenzoimidazole, 5-methoxy-2-mercaptobenzoimidazole, 4-methoxy-2-mercaptobenzoimidazole, 5-nitro-2-mercaptobenzoimidazole, 5-amino-2-mercaptobenzoimidazole, 5-carboxy-2-mercaptobenzoimidazole, and zinc salts of 2-mercaptobenzoimidazole. Among these, 2-mercaptobenzoimidazole, 5-methyl-2-mercaptobenzoimidazole, 4-methyl-2-mercaptobenzoimidazole, 5-methoxy-2-mercaptobenzoimidazole, 4-methoxy-2-mercaptobenzoimidazole, and zinc salts of 2-mercaptobenzoimidazole are preferred.

The amount of the heteroaromatic ring compound added is preferably 0.2 to 10.0 parts by mass with respect to 100 parts by mass of the solid content of the chloroprene-based polymer composition contained in the composition for forming a dip-molded body. The amount of the heteroaromatic ring compound added is, for example, 0.2, 0.3, 0.4, 0.5, 1.0, 2.0, 3.0, 4.0, 5.0, 6.0, 7.0, 8.0, 9.0, or 10.0 parts by mass, and may be in the range between the two values exemplified herein. When the amount of the heteroaromatic ring compound added is 0.2 parts by mass or more, the dip-molded article obtained using this composition exhibits very high rupture strength. When the amount of the heteroaromatic ring compound added is 10.0 parts by mass or less, the stability of the composition for forming a dip-molded body is ensured. From the viewpoint of balancing the properties of flexibility and rupture strength of the obtained dip-molded article, the amount of the heteroaromatic ring compound added is more preferably 0.3 to 5.0 parts by mass.

The method for producing the composition for forming a dip-mold body of one embodiment of the present

invention can include a raw material mixing step of mixing raw materials including the chloroprene-based polymer composition, the metal oxide, the antioxidant, and other necessary agents.

In the raw material mixing step, it is also possible to prepare in advance an aqueous dispersion solution containing the metal oxide, antioxidant, and other necessary agents, and to mix the chloroprene-based polymer composition and the aqueous dispersion solution.

The raw material mixing step can be performed with a known mixing device such as a ball mill.

2.2 Dip-molding Step

The method for producing the dip-molded product of one embodiment of the present invention can include a dip-molding step of dip-molding the composition for forming a dip-molded body containing the chloroprene-based polymer composition obtained by the above-described method for producing the chloroprene-based polymer composition to obtain a dip-molded body.

Examples of the dip-molding method of one embodiment of the present invention include an immersion coagulation method, a simple immersion method, a heat-sensitive immersion method, and an electrodeposition method. The immersion coagulation method can be used from the viewpoint of easy production and easily obtaining a dip-molded body with a constant thickness. Specifically, a mold die made of ceramics coated with a calcium-based coagulating liquid is immersed in the composition for forming a dip-molded body, and the composition for forming a dip-molded body is coagulated. Then, after water-soluble impurities are removed by leaching, it is dried, and further heated and vulcanized to form a dip-molded film (rubber coating film), and then the dip-molded film is released from the mold. Thereby, a film-shaped dip-molded body can be obtained.

2.3 Drying Step

The method for producing the dip-molded article of one embodiment of the present invention can include a drying step of heating and drying the dip-molded body to obtain a dip-molded article.

The heat drying temperature may be appropriately set according to the composition of the chloroprene-based polymer composition, and may be 120 to 180°C. The heating temperature is preferably 120 to 150°C. The heating temperature is, for example, 120, 130, 140, 150, 160, 170, 180, 190, 200, 210, or 220°C, and may be in the range between the two values exemplified herein. The heating time may be appropriately set according to the composition of the chloroprene-based polymer composition, the shape of the unvulcanized body, or the like, and may be 10 to 300 minutes. The heating time is, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 minutes, and may be in the range between the two values exemplified herein. As an example, the dip-molded article of one embodiment of the present invention can be the one heat dried at 140°C for 1 hour.

3. Dip-molded Article (Dip-molded Article Film, Film)

The dip-molded article of one embodiment of the present invention is obtained using the above-described chloroprene-based polymer composition. The dip-molded body can be obtained by dip-molding the above-mentioned composition for forming a dip-molded body, either alone or after blending with another composition for forming a dip-molded body. The dip-molded article of the present invention can be made by heat drying a dip-molded body at 140°C for 1 hour, the dip-molded body obtained by dip-molding the composition for forming a dip-molded body by the immersion coagulation method. The dip-molded article of the present invention has a high tensile strength at break and a low modulus at 100% elongation. In addition, the dip-molded article can be produced efficiently because of the high recovery rate from the polymerization container. The dip-molded article of one embodiment of the present invention can be suitably used for industrial and household gloves, medical gloves, balloons, catheters, and boots.

The dip-molded article of the present invention may have the components contained in the above-described composition for forming a dip-molded body. Further, the dip-molded article can contain the diene-based polymer A and the chloroprene-based polymer B as base polymers, and when the amount of the dip-molded article is taken as 100 mass%, it can contain 70 mass% or more of the diene-based polymer A and the chloroprene-based polymer B. It preferably contains 80 mass% or more, and more preferably contains 90 mass% or more. When the amount of the dip-molded article is taken as 100 mass%, the content of the diene-based polymer A and the chloroprene-based polymer B in the dip-molded article is, for example, 70, 75, 80, 85, 90, 95, 96, 97, 98, 99, or 100 mass%, and may be in the range between the two values exemplified herein.

The dip-molded article containing the chloroprene-based polymer of the present invention has a high tensile strength at break and a low modulus at 100% elongation, regardless of whether a vulcanizing agent and a vulcanization accelerator are added. The dip-molded article of one embodiment of the present invention may not contain a vulcanizing

agent and a vulcanization accelerator, and may not also contain sulfur and a vulcanization accelerator such as thiuram-based, dithiocarbamate-based, thiourea-based, guanidine-based, xanthogenate-based, and thiazole-based vulcanization accelerators.

3.1 Property of Dip-molded Article

For the dip-molded article of one embodiment of the present invention, the peak having a weight average molecular weight of 5,000 to 80,000 and the peak having a weight average molecular weight of 200,000 to 1,500,000 are preferably detected in a molecular weight distribution obtained by dissolving the dip-molded product in tetrahydrofuran and measuring the soluble component thereof by gel permeation chromatography. The peak having a weight average molecular weight of 5,000 to 50,000 and the peak having a weight average molecular weight of 300,000 to 1,500,000 are more preferably detected, and the peak having a weight average molecular weight of 8,000 to 30,000 and the peak having a weight average molecular weight of 500,000 to 1,500,000 are even more preferably detected. The weight average molecular weight and formulation ratio of the low molecular weight component and the high molecular weight component can be as described above.

For the chloroprene-based polymer composition of one embodiment of the present invention, the tensile strength at break of the dip-molded article containing the chloroprene-based polymer composition, which is measured in accordance with JIS K6251, is preferably 18.0 MPa or higher, and more preferably 19.0 MPa or higher. The tensile strength at break is, for example, 18.0, 19.0, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be in the range between the two values exemplified herein.

For the chloroprene-based polymer composition of one embodiment of the present invention, the modulus at 100% elongation of the dip-molded article containing the chloroprene-based polymer composition, which is measured in accordance with JIS K6251, is preferably 0.65 MPa or lower, and more preferably 0.60 MPa or lower. The modulus at 100% elongation is, for example, 0.30, 0.35, 0.40, 0.45, 0.50, 0.55, 0.60, or 0.65 MPa, and may be in the range between the two values exemplified herein.

The dip-molded article contains the chloroprene-based polymer, and further can contain an antioxidant and a metal oxide. Further, the above-described dip-molded article may contain a vulcanizing agent, a vulcanization accelerator and an anti-aging agent. The production method of the dip-molded article, the method for measuring the tensile strength at break and the modulus at 100% elongation can be as described in Examples.

The tensile strength at break and modulus at 100% elongation of the dip-molded article can be controlled by adjusting the type and amount of raw material when polymerizing the diene-based polymer A and the chloroprene-based polymer B, the type and amount of the agent used, and polymerization conditions.

3.2 Shape of Dip-molded Article

The thickness of the dip-molded article (e.g., minimum thickness) may be 0.01 to 0.50 mm. The thickness of the dip-molded article is, for example, 0.01, 0.05, 0.10, 0.20, 0.30, 0.40, or 0.50 mm, and may be in the range between the two values exemplified herein. The thickness of the dip-molded article can be adjusted by the time for which the mold is immersed in the composition for forming a dip-molded body, the solid content concentration of the composition for forming a dip-molded body, and the like. If it is desired to reduce the thickness of the dip-molded article, the immersion time may be shortened, or the solid content concentration of the composition for forming a dip-molded body may be lowered.

The dip-molded product may contain sulfur or a vulcanization accelerator. However, even if the dip-molded article does not contain sulfur and a vulcanization accelerator, it has mechanical properties equivalent to or superior to those of a vulcanized dip-molded article obtained from a conventional composition for forming a dip-molded body containing a chloroprene-based polymer. For this reason, the chloroprene-based polymer composition of the present invention is suitably used as a raw material for the dip-molded article (dip-molded body) of the chloroprene-based polymer of the present embodiment.

Further, the method for producing a dip-molded article of one embodiment of the present invention can include a step of performing heat drying on the obtained dip-molded body and vulcanizing the unvalcanized dip-molded body.

## Examples

Hereinafter, the present invention will be explained in more detail based on Examples, but the present invention is not limited to these.

<Preparation of Chloroprene-based Polymer A>

(Synthesis Example A-1)

To a polymerization vessel with an internal volume of 30 liters, 64 parts by mass of chloroprene (monomer), 9 parts by mass of 2,3-dichloro-1,3-butadiene, 77 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 3.4 parts by mass of n-dodecyl mercaptan, 0.8 parts by mass of potassium hydroxide, 0.5 parts by mass of sodium salt of β-naphthalenesulfonic acid formalin condensate (product name "Demol N", made by Kao Corporation), and 0.5 parts by mass of sodium hydrogen sulfite were added. Polymerization was carried out at a polymerization temperature of 35°C under a nitrogen stream by continuously adding 0.35 mass% potassium persulfate solution as a polymerization initiator. When the polymerization rate of the charged monomer reached 80%, 27 parts by mass of chloroprene (monomer) were continuously added over 100 minutes. When the polymerization rate of the initially charged monomer and the continuously added monomer reached 91%, the addition of potassium persulfate solution was stopped to stop the polymerization to obtain the polymerization liquid. The polymerization liquid was distilled under reduced pressure to remove the unreacted monomer, and concentrated to obtain a latex of the chloroprene-based polymer A-1 with a solid content concentration of 60 mass%. The obtained latex was used in the preparation of the chloroprene-based polymer B of Example 7. A part of the obtained latex was precipitated by the method described below to give the chloroprene-based polymer A-1, which was then used for analysis and for preparing the chloroprene-based polymer B in Examples 1 to 3.

(Precipitation of Chloroprene-based Polymer A with Methanol)

The obtained latex of the chloroprene-based polymer A-1 was mixed with a large amount of methanol to precipitate the rubber component (chloroprene-based polymer A-1), which was then filtered and dried to obtain a sample of the chloroprene-based polymer A-1. The weight average molecular weight of the chloroprene-based polymer was measured from the obtained sample. This was also used to prepare the chloroprene-based polymer B in Examples 1 to 3 described below. The analysis results are shown in Table 1. The measurement method will be described below.

(Synthesis Example A-2)

Polymerization was carried out in the same manner as in Synthesis Example A-1, except that the amount of n-dodecyl mercaptan in Synthesis Example A-1 was changed into 5.3 parts by mass. The obtained polymerization liquid was distilled under reduced pressure to remove unreacted monomers, and the latex of the chloroprene-based polymer A-2 with a solid content concentration of 60 mass% was obtained by concentration. The obtained latex was used to precipitate the chloroprene-based polymer A-2 in the same manner as in Synthesis Example A-1, which was used when preparing the chloroprene-based polymer B. The weight average molecular weight of the chloroprene-based polymer A-2 was measured in the same manner as in Synthesis Example A-1. The analysis results are shown in Table 1.

(Synthesis Example A-3)

Polymerization was carried out in the same manner as in Synthesis Example A-1, except that the amount of n-dodecyl mercaptan in Synthesis Example A-1 was changed into 2.4 parts by mass. The obtained polymerization liquid was distilled under reduced pressure to remove unreacted monomers, and the latex of the chloroprene-based polymer A-3 with a solid content concentration of 60 mass% was obtained by concentration. The obtained latex was used to precipitate the chloroprene-based polymer A-3 in the same manner as in Synthesis Example A-1, which was used when preparing the chloroprene-based polymer B. The weight average molecular weight of the chloroprene-based polymer A-3 was measured in the same manner as in Synthesis Example A-1. The analysis results are shown in Table 1.

(Synthesis Example A-4)

Polymerization was carried out in the same manner as in Synthesis Example A-1, except that the amount of n-dodecyl mercaptan in Synthesis Example A-1 was changed into 1.5 parts by mass. The obtained polymerization liquid was distilled under reduced pressure to remove unreacted monomers, and the latex of the chloroprene-based polymer A-4 with a solid content concentration of 60 mass% was obtained by concentration. The obtained latex was used to precipitate the chloroprene-based polymer A-4 in the same manner as in Synthesis Example A-1, which was used when preparing the chloroprene-based polymer B. The weight average molecular weight of the chloroprene-based polymer A-4 was measured in the same manner as in Synthesis Example A-1. The analysis results are shown in Table 1.

(Synthesis Example A-5)

To a polymerization vessel with an internal volume of 30 liters, 64 parts by mass of chloroprene (monomer), 9 parts by mass of 2,3-dichloro-1,3-butadiene, 351 parts by mass of pure water, 92 parts by mass of gum rosin-based disproportionated rosin aqueous solution (product name "RONJIS K-25", 25 mass% solid content, made by ARAKAWA CHEMICAL INDUSTRIES, LTD.), 3.4 parts by mass of n-dodecyl mercaptan, 4 parts by mass of potassium hydroxide, 2 parts by mass of sodium salt of β-naphthalenesulfonic acid formalin condensate (product name "Demol N", made by Kao Corporation), and 0.5 parts by mass of sodium hydrogen sulfite were added so that the total amount of liquid added becomes 18 L. Polymerization was carried out at a polymerization temperature of 35°C under a nitrogen stream by continuously adding 0.35 mass% potassium persulfate solution as a polymerization initiator. When the polymerization rate of the charged monomer reached 80%, 27 parts by mass of chloroprene (monomer) were continuously added over 100 minutes. When the polymerization rate of the initially charged monomer and the continuously added monomer reached 91%, the addition of potassium persulfate solution was stopped to stop the polymerization to obtain the polymerization liquid. The obtained latex was of the chloroprene-based polymer A-5 (solid content concentration of 21.8 mass%) was used in Example 8. Further, the chloroprene-based polymer A-5 was precipitated in the same manner as in Synthesis Example A-1, and the weight average molecular weight of the chloroprene-based polymer A-5 was measured. The analysis results are shown in Table 1.

(Synthesis Example A-6)

To a polymerization vessel with an internal volume of 30 liters, 91 parts by mass of chloroprene (monomer), 9 parts by mass of 2,3-dichloro-1,3-butadiene, 100 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 0.03 parts by mass of n-dodecyl mercaptan, 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.04 parts by mass of thiourea dioxide were added so that the total amount of liquid added becomes 25 L. Polymerization was carried out at a polymerization temperature of 13°C under a nitrogen stream by continuously adding 0.35 mass% potassium persulfate solution as a polymerization initiator. When the polymerization rate reached 85%, the addition of potassium persulfate solution was stopped to stop the polymerization to obtain the polymerization liquid. The obtained latex was of the chloroprene-based polymer A-6 (solid content concentration of 41.7 mass%) was used in Example 9. Further, the chloroprene-based polymer A-6 was precipitated in the same manner as in Synthesis Example A-1, and the weight average molecular weight of the chloroprene-based polymer A-6 was measured. The analysis results are shown in Table 1.

[Table 1]

| Table 1 | | Synthesis Example A-1 | Synthesis Example A-2 | Synthesis Example A-3 | Synthesis Example A-4 | Synthesis Example A-5 | Synthesis Example A-6 |
|---|---|---|---|---|---|---|---|
| Diene-based Polymer A | | Chloroprene-based Polymer A-1 | Chloroprene-based Polymer A-2 | Chloroprene-based Polymer A-3 | Chloroprene-based Polymer A-4 | Chloroprene-based Polymer A-5 | Chloroprene-based Polymer A-6 |
| Weight Average Molecular Weight of Chloroprene-based Polymer A | g/mol | 18,512 | 8,765 | 29,754 | 44,639 | 17,854 | 634,639 |

<Preparation of Chloroprene-based Polymer B>

(Example 1)

To a polymerization vessel with an internal volume of 30 liters, 21.3 parts by mass of the chloroprene-based polymer A-1 prepared and precipitated in Synthesis Example A-1, 91 parts by mass of chloroprene (monomer), 9 parts by mass of 2,3-dichloro-1,3-butadiene, 87 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-1 with a solid content concentration of 60 mass%, i.e., the chloroprene-based polymer composition. All of the obtained chloroprene-based polymer composition was removed from the polymerization vessel, and the actual weight of the chloroprene-based polymer composition after polymerization was measured. From the measured actual weight of the chloroprene-based polymer composition after polymerization, the recovery rate of the chloroprene-based polymer composition during the polymerization of the chloroprene-based polymer B was calculated. The calculation results are shown in Table 2. The calculation method is described below.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B-1. The weight average molecular weight of the chloroprene-based polymer B-1 was measured from the obtained sample. The analysis results are shown in Table 2. The measurement method will be described below.

(Example 2, Example 3)

Polymerization was carried out in the same manner as in Example 1, with the amounts of raw materials charged and polymerization conditions shown in Table 2. The obtained polymerization liquid was distilled under reduced pressure to remove unreacted monomers, and concentrated to obtain the latex of the chloroprene-based polymer B , with a solid content concentration of 60 mass%, i.e., the chloroprene-based polymer composition. The total amount of the obtained chloroprene-based polymer composition was removed from the polymerization vessel, and the recovery rate of the chloroprene-based polymer composition during the polymerization of the chloroprene-based polymer B was calculated in the same manner as in Example 1. The calculation results are shown in Table 2.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B. The weight average molecular weight of the chloroprene-based polymer B was measured from the obtained sample. The analysis results are shown in Table 2.

(Example 4)

To a polymerization vessel with an internal volume of 30 liters, 21.3 parts by mass of the chloroprene-based polymer A-2 prepared and precipitated in Synthesis Example A-2, 91 parts by mass of chloroprene (monomer), 9 parts by mass of 2,3-dichloro-1,3-butadiene, 87 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-4 with a solid content concentration of 60 mass%, i.e., the chloroprene-based polymer composition. All of the obtained chloroprene-based polymer composition was removed from the polymerization vessel, and the recovery rate of the chloroprene-based polymer composition during the polymerization of the chloroprene-based polymer B was calculated in the same manner as in Example 1. The calculation results are shown in Table 2.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate

the rubber content, filtered, and dried to obtain the sample of the chloroprene-based polymer B-4. The weight average molecular weight of the chloroprene-based polymer B-4 was measured from the obtained sample. The analysis results are shown in Table 2.

(Example 5)

To a polymerization vessel with an internal volume of 30 liters, 21.3 parts by mass of the chloroprene-based polymer A-3 prepared and precipitated in Synthesis Example A-3, 91 parts by mass of chloroprene (monomer), 9 parts by mass of 2,3-dichloro-1,3-butadiene, 87 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-5 with a solid content concentration of 60 mass%, i.e., the chloroprene-based polymer composition. All of the obtained chloroprene-based polymer composition was removed from the polymerization vessel, and the recovery rate of the chloroprene-based polymer composition during the polymerization of the chloroprene-based polymer B was calculated in the same manner as in Example 1. The calculation results are shown in Table 2.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B-5. The weight average molecular weight of the chloroprene-based polymer B-5 was measured from the obtained sample. The analysis results are shown in Table 2.

(Example 6)

To a polymerization vessel with an internal volume of 30 liters, 21.3 parts by mass of the chloroprene-based polymer A-4 prepared and precipitated in Synthesis Example A-4, 91 parts by mass of chloroprene (monomer), 9 parts by mass of 2,3-dichloro-1,3-butadiene, 87 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-6 with a solid content concentration of 60 mass%, i.e., the chloroprene-based polymer composition. All of the obtained chloroprene-based polymer composition was removed from the polymerization vessel, and the recovery rate of the chloroprene-based polymer composition containing the chloroprene-based polymer B was calculated in the same manner as in Example 1. The calculation results are shown in Table 2.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B-6. The weight average molecular weight of the chloroprene-based polymer B-6 was measured from the obtained sample. The analysis results are shown in Table 2.

(Example 7)

To a polymerization vessel with an internal volume of 30 liters, 39 parts by mass of the latex of the chloroprene-based polymer A-1 prepared and precipitated in Synthesis Example A-1, 91 parts by mass of chloroprene (monomer), 9

parts by mass of 2,3-dichloro-1,3-butadiene, 74 parts by mass of pure water, 13.6 parts by mass of gum rosin-based disproportionated rosin aqueous solution (product name "RONJIS K-25", 25 mass% solid content, made by ARAKAWA CHEMICAL INDUSTRIES, LTD.), 0.6 parts by mass of potassium hydroxide, 0.4 parts by mass of sodium salt of β-naphthalenesulfonic acid formalin condensate (product name "Demol N", made by Kao Corporation), 0.4 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-7 with a solid content concentration of 60 mass%, i.e., the chloroprene-based polymer composition. All of the obtained chloroprene-based polymer composition was removed from the polymerization vessel, and the recovery rate of the chloroprene-based polymer composition containing the chloroprene-based polymer B was calculated in the same manner as in Example 1. The calculation results are shown in Table 2.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B-7. The weight average molecular weight of the chloroprene-based polymer B-7 was measured from the obtained sample. The analysis results are shown in Table 2.

(Example 8)

To a polymerization vessel with an internal volume of 30 liters, 130.8 parts by mass of the latex of the chloroprene-based polymer A-5 prepared and precipitated in Synthesis Example A-5, 91 parts by mass of chloroprene (monomer), 9 parts by mass of 2,3-dichloro-1,3-butadiene, 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-8 with a solid content concentration of 60 mass%, i.e., the chloroprene-based polymer composition. All of the obtained chloroprene-based polymer composition was removed from the polymerization vessel, and the recovery rate of the chloroprene-based polymer composition during the polymerization of the chloroprene-based polymer B was calculated in the same manner as in Example 1. The calculation results are shown in Table 2.

After measuring the actual weight of the chloroprene-based polymer composition after polymerization, 50 ml of the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B-8. The weight average molecular weight of the chloroprene-based polymer B-8 was measured from the obtained sample. The analysis results are shown in Table 2.

(Example 9)

To a polymerization vessel with an internal volume of 30 liters, 1000 parts by mass of the latex of the chloroprene-based polymer A-6 prepared and precipitated in Synthesis Example A-6, 74 parts by mass of chloroprene (monomer), 7 parts by mass of 2,3-dichloro-1,3-butadiene, 2.7 parts by mass of n-dodecyl mercaptan, 0.4 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer B-9 with a solid content concentration of 60 mass%, i.e., the chloroprene-based polymer composition. All of the obtained chloroprene-based polymer composition was removed from the polymerization vessel, and the recovery rate of the chloroprene-based polymer composition containing the chloroprene-based polymer B was calculated in the same manner as in Example 1. The calculation results are shown in Table 2.

After measuring the actual weight of the chloroprene-based polymer composition after polymerization, 50 ml of

the chloroprene-based polymer composition was sampled, and the remaining chloroprene-based polymer composition was used to prepare the dip-molded article for evaluation.

The sampled chloroprene-based polymer composition was mixed with a large amount of methanol to precipitate the rubber content, filtered, and dried to obtain the sample of the chloroprene-based polymer B-9. The weight average molecular weight of the chloroprene-based polymer B-9 was measured from the obtained sample. The analysis results are shown in Table 2.

(Comparative Example 1)

To a polymerization vessel with an internal volume of 30 liters, 91 parts by mass of chloroprene (monomer), 9 parts by mass of 2,3-dichloro-1,3-butadiene, 77 parts by mass of pure water, 17.6 parts by mass of gum rosin-based disproportionated rosin aqueous solution (product name "RONJIS K-25", 25 mass% solid content, made by ARAKAWA CHEMICAL INDUSTRIES, LTD.), 0.02 parts by mass of n-dodecyl mercaptan, 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.04 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a latex of the chloroprene-based polymer C with a solid content concentration of 60 mass%, i.e., the chloroprene-based polymer composition. All of the obtained chloroprene-based polymer composition was removed from the polymerization vessel, and the recovery rate of the chloroprene-based polymer composition of the chloroprene-based polymer C was calculated in the same manner as in Example 1. The calculation results are shown in Table 3. The obtained chloroprene-based polymer composition was also used to prepare the dip-molded article for evaluation. Further, a part of the obtained chloroprene-based polymer composition was used in Comparative Example 2.

(Comparative Example 2)

Polymerization was carried out in the same manner as in Synthesis Example A-1. The obtained polymerization liquid was distilled under reduced pressure to remove unreacted monomers, and concentrated to obtain the latex of the chloroprene-based polymer D with a solid content concentration of 60 mass%, i.e., the chloroprene-based polymer composition. The total amount of the obtained chloroprene-based polymer composition was removed from the polymerization vessel, and the recovery rate of the chloroprene-based polymer composition of the chloroprene-based polymer was calculated in the same manner as in Example 1. The calculation results are shown in Table 3.

The chloroprene-based polymer composition of the chloroprene-based polymer E was obtained by mixing the chloroprene-based polymer composition of the chloroprene-based polymer C obtained in Comparative Example 1 with the chloroprene-based polymer composition of the chloroprene-based polymer D in a weight ratio of C/D = 80/20. The obtained chloroprene-based polymer composition was used to prepare the dip-molded article for evaluation.

The following method was used to analyze the chloroprene-based polymers A and B.

<Measurement of Weight Average Molecular Weight of Chloroprene-based Polymers A and B>

The weight average molecular weight was measured by gel permeation chromatography (GPC) under the following measurement conditions using the sample obtained by subjecting the latex of the chloroprene-based polymer A and the latex containing the chloroprene-based polymer, i.e., the chloroprene-based polymer composition, to methanol precipitation, filtering, drying, and dissolving the resulting polymer in 20 ml of tetrahydrofuran, as described above.

Equipment Name: HLC-8320 (made by Tosoh Corporation)
Column: Three TSKgel GMHHR-H in series
Temperature: 40°C
Detection: differential refractive index
Solvent: tetrahydrofuran
Calibration Curve: prepared using standard polystyrene (PS)

The recovery rate of the chloroprene-based polymer composition was evaluated by the following method.

<Recovery Rate of Chloroprene-based Polymer Composition>

The recovery rate of the chloroprene-based polymer composition was calculated from the actual weight of the chloroprene-based polymer composition after polymerization and the amount of the chloroprene-based polymer composition charged in the polymerization of the chloroprene-based polymer composition when the obtained chloroprene-based polymer composition was removed from the piping at the bottom of the polymerization vessel in each of Examples and Comparative Examples, in accordance with the following formula. When the chloroprene-based polymer composition is removed from the piping at the bottom of the polymerization vessel, the stickier the chloroprene-based polymer composition is, the more the chloroprene-based polymer composition adheres to the wall of the polymerization vessel, and the less the amount of the chloroprene-based polymer composition recovered. It should be noted that the theoretical weight indicates the amount of the chloroprene-based polymer composition existing in the polymerization vessel just before the recovery operation from the polymerization vessel, which is determined by subtracting the amount of the unreacted monomer removed from the system by the operation of distillation under reduced pressure and the concentration operation from the charged amount.

(Recovery Rate of Chloroprene-based Polymer Composition) = (Actual Weight of Chloroprene-based Polymer Composition) / (Theoretical Weight of Chloroprene-based Polymer Composition) × --> 100

The composition for forming a dip-molded body containing the above-described latex, i.e., the chloroprene-based polymer composition, was prepared by the following method, and the dip-molded body was obtained by dip-molding it. Further, the dip-molded body was subjected to a heat-drying treatment to produce a dip-molded article, which was then evaluated.

<Preparation of Dip-molded Article>

The composition for forming a dip-molded body was prepared by mixing 100 parts by mass of the solid content of the chloroprene-based polymer composition containing each chloroprene-based polymer with 7.1 parts by mass of an aqueous dispersion, and adding water to adjust the total solid content concentration of the blend to 30 mass%. The above-described aqueous dispersion was prepared by mixing 2 parts by mass of Type 2 zinc oxide, 2 parts by mass of a butylated reaction product of p-cresol and dicyclopentadiene (product name "Nocrac PBK", made by Ouchi Shinko Chemical Industry Co., Ltd.), 0.7 parts by mass of 2-mercaptobenzoimidazole which is a heteroaromatic ring compound (product name "Noclac MB", made by Ouchi Shinko Chemical Industry Co., Ltd.), 0.1 part by mass of sodium salt of β-naphthalene sulfonic acid formalin condensate (product name "Demol N", made by Kao Corporation), and 10.7 parts by mass of water at 20°C for 16 hours using a ceramic ball mill. The obtained composition for forming a dip-molded body contains 2 parts by mass of Type 2 zinc oxide, 2 parts by mass of a butylated reaction product of p-cresol and dicyclopentadiene (product name "Nocrac PBK", made by Ouchi Shinko Chemical Industry Co., Ltd.), 0.7 parts by mass of 2-mercaptobenzoimidazole which is a heteroaromatic ring compound (product name "Noclac MB", made by Ouchi Shinko Chemical Industry Co., Ltd.), 0.1 part by mass of a sodium salt of β-naphthalenesulfonic acid formalin condensate (product name "Demol N", made by Kao Corporation), and 10.7 parts by mass of water, with respect to 100 parts by mass of the solid content of the chloroprene-based polymer composition.

A ceramic cylindrical mold with an outer diameter of 50 mm (made by Shinko Ceramics Co., Ltd.) was immersed for 1 second in a coagulation liquid containing 62 parts by mass of water, 35 parts by mass of potassium nitrate tetrahydrate, and 3 parts by mass of calcium carbonate, and then removed. After drying for 3 minutes, the mold was immersed for 2 minutes in the composition for forming a dip-molded body prepared by the above-mentioned procedure. The mold was then washed with running water at 45°C for 1 minute and dried at 140°C for 1 hour to prepare a dip-molded article film for evaluation.

(Film Thickness)

The thickness (film thickness) of the center of the dip-molded article film for tensile property evaluation was measured at three points using a test piece thickness gauge (made by Kobunshi Keiki Co., Ltd., product name: ASKER SDA-12), and the minimum thickness was obtained as the thickness of the dip-molded article film for evaluation. The results are shown in Table 2 and Table 3.

(Measurement of Tensile Property)

The modulus at 100% elongation and tensile strength at break were measured in accordance with JIS K 6251

using the dip-molded article film for tensile property evaluation. The results are shown in Table 2 and Table 3.

[Table 2]

| Table 2 | | | Example 1 | Example 2 | Example 3 | Example 4 | Example 5 | Example 6 | Example 7 | Example 8 | Example 9 |
|---|---|---|---|---|---|---|---|---|---|---|---|
| Used Diene-based Polymer A | | - | Chloroprene-based Polymer A-1 | Chloroprene-based Polymer A-1 | Chloroprene-based Polymer A-1 | Chloroprene-based Polymer A-2 | Chloroprene-based Polymer A-3 | Chloroprene-based Polymer A-4 | Chloroprene-based Polymer A-1 | Chloroprene-based Polymer A-5 | Chloroprene-based Polymer A-6 |
| Charged Amount of Used Raw Material | Diene-based Polymer A | parts by mass | 21.3 | 15.0 | 28.3 | 21.3 | 21.3 | 21.3 | 0.0 | 0.0 | 0.0 |
| | Latex of Diene-based Polymer A | parts by mass | 0 | 0 | 0 | 0 | 0 | 0 | 39.0 | 130.8 | 1000 |
| | Chloroprene | parts by mass | 91 | 91 | 91 | 91 | 91 | 91 | 91 | 91 | 74 |
| | 2,3-Dichloro-1,3-butadiene | parts by mass | 9 | 9 | 9 | 9 | 9 | 9 | 9 | 9 | 7 |
| | Pure Water | parts by mass | 87 | 87 | 87 | 87 | 87 | 87 | 74 | 0 | 0 |
| | n-Dodecyl Mercaptan | parts by mass | 0 | 0 | 0 | 0 | 0 | 0 | 0 | 0 | 2.7 |
| | Gum Rosin-based Disproportionated Rosin Aqueous Solution | parts by mass | 17.6 | 17.6 | 17.6 | 17.6 | 17.6 | 17.6 | 13.56 | 0 | 0 |
| | Potassium Hydroxide | parts by mass | 0.8 | 0.8 | 0.8 | 0.8 | 0.8 | 0.8 | 0.62 | 0 | 0 |
| | Sodium Salt of β-Naphthalenesulfonic Acid Formalin Condensate | parts by mass | 0.5 | 0.5 | 0.5 | 0.5 | 0.5 | 0.5 | 0.41 | 0 | 0 |

(continued)

| Table 2 | | | Example 1 | Example 2 | Example 3 | Example 4 | Example 5 | Example 6 | Example 7 | Example 8 | Example 9 |
|---|---|---|---|---|---|---|---|---|---|---|---|
| Used Diene-based Polymer A | | - | Chloroprene-based Polymer A-1 | Chloroprene-based Polymer A-1 | Chloroprene-based Polymer A-1 | Chloroprene-based Polymer A-2 | Chloroprene-based Polymer A-3 | Chloroprene-based Polymer A-4 | Chloroprene-based Polymer A-1 | Chloroprene-based Polymer A-5 | Chloroprene-based Polymer A-6 |
| Polymerization Condition | Sodium Hydrogen Sulfite | parts by mass | 0.5 | 0.5 | 0.5 | 0.5 | 0.5 | 0.5 | 0.39 | 0.5 | 0.4 |
| | Thiourea Dioxide | parts by mass | 0.03 | 0.03 | 0.03 | 0.03 | 0.03 | 0.03 | 0.03 | 0.03 | 0.02 |
| | Polymerization Temperature | °C | 13 | 13 | 13 | 13 | 13 | 13 | 13 | 13 | 13 |
| | Polymerization Rate | parts by mass | 85 | 85 | 85 | 85 | 85 | 85 | 85 | 85 | 85 |
| Chloroprene-based Polymer B | Weight Average Molecular Weight of Chloroprene-based Polymer B | g/mol | 773,482 | 752,453 | 708,972 | 723,211 | 745,669 | 789,685 | 765,923 | 787,932 | 20,453 |
| Polymer Composition in Polymerization of Chloroprene-based Polymer B | Recovery Rate | mass% | 98.8 | 98.9 | 98.5 | 98.6 | 98.8 | 98.9 | 98.5 | 98.7 | 97.5 |
| Tensile Property of Dip-molded Article Film | Film Thickness | mm | 0.20 | 0.21 | 0.20 | 0.19 | 0.19 | 0.20 | 0.21 | 0.18 | 0.20 |
| | Modulus at 100% Elongation | MPa | 0.53 | 0.59 | 0.49 | 0.5 | 0.56 | 0.64 | 0.52 | 0.54 | 0.53 |
| | Tensile Strength at Break | MPa | 20.2 | 21.1 | 19.9 | 19.1 | 20.8 | 21.3 | 20.4 | 20.3 | 18.8 |

[Table 3]

| Table 3 | | | Comparative Example 1 | Comparative Example 2 |
|---|---|---|---|---|
| Polymer Composition in Polymerization of Chloroprene-based Polymer | Recovery Rate | mass% | 94.9 | 94.9 |
| Tensile Property of Dip-molded Article Film | Film Thickness | mm | 0.19 | 0.21 |
| | Modulus at 100% Elongation | MPa | 0.89 | 0.47 |
| | Tensile Strength at Break | MPa | 21.9 | 14.8 |

## Claims

1. A method for producing a chloroprene-based polymer composition, wherein:

   the chloroprene-based polymer composition contains a diene-based polymer A and a chloroprene-based polymer B,
   a weight average molecular weight of the diene-based polymer A is different from a weight average molecular weight of the chloroprene-based polymer B, and
   the method comprises a polymerization step of forming the chloroprene-based polymer B via polymerization in presence of the diene-based polymer A.

2. The method for producing the chloroprene-based polymer composition of Claim 1, wherein difference between the weight average molecular weight of the diene-based polymer A and the weight average molecular weight of the chloroprene-based polymer B is 100,000 or more.

3. The method for producing the chloroprene-based polymer composition of Claim 1 or 2, wherein the weight average molecular weight of the diene-based polymer A is 5,000 to 80,000.

4. The method for producing the chloroprene-based polymer composition of any one of Claims 1 to 3, wherein, in the polymerization step of forming the chloroprene-based polymer B via the polymerization, an amount of the diene-based polymer A charged is 5.0 to 60.0 parts by mass when an amount of chloroprene monomer or raw material monomer charged is taken as 100 parts by mass.

5. The method for producing the chloroprene-based polymer composition of any one of Claims 1 to 4, wherein the diene-based polymer A comprises at least one selected from a group consisting of natural rubber, isoprene-based polymer, butadiene-based polymer, styrene butadiene-based polymer, chloroprene-based polymer, and acrylonitrile butadiene-based polymer.

**INTERNATIONAL SEARCH REPORT**

International application No.
**PCT/JP2023/003349**

**A. CLASSIFICATION OF SUBJECT MATTER**

***C08L 11/00***(2006.01)i; ***C08F 2/44***(2006.01)i; ***C08F 279/02***(2006.01)i
FI: C08L11/00; C08F2/44 C; C08F279/02

According to International Patent Classification (IPC) or to both national classification and IPC

**B. FIELDS SEARCHED**

Minimum documentation searched (classification system followed by classification symbols)

C08L11/00; C08F2/44; C08F279/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-096980 A (POLIMERI EUROPA SPA) 13 April 2006 (2006-04-13) claims, paragraph [0033], examples 1-3 | 1-5 |
| P, X | WO 2022/130737 A1 (DENKA CO., LTD.) 23 June 2022 (2022-06-23) claims, example B1 | 1, 4-5 |
| P, A | WO 2022/202556 A1 (DENKA CO., LTD.) 29 September 2022 (2022-09-29) | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2023** | **18 April 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/003349**

| Patent document cited in search report | Publication date (day/month/year) | Patent family member(s) | Publication date (day/month/year) |
|---|---|---|---|
| JP 2006-096980 A | 13 April 2006 | EP 1607420 A1<br>claims, paragraph [0033], examples 1-3<br>US 2005/0282949 A1 | |
| WO 2022/130737 A1 | 23 June 2022 | (Family: none) | |
| WO 2022/202556 A1 | 29 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014114342 A
- WO 2019009038 A
- JP 2019143002 A
- WO 2021132460 A
- JP 2017508840 A
- JP 2020189963 A